# EUROPEAN PATENT APPLICATION

(11) **EP 0 961 413 A2**
(43) Date of publication of application: **01.12.1999**
(21) Application number: 99660089.6
(22) Date of filing: 25.05.1999
(51) Int. Cl.: H04B 1/38

(54) **A transport package for a mobile station**

(30) Priority: 25.05.1998 FI 981155; 09.06.1998 FI 981311
(71) Applicant: NOKIA MOBILE PHONES LTD., 02150 Espoo (FI)
(72) Inventor: Rinne, Juha, 33580 Tampere (FI); Erkkilä, Marko, 37200 Siuro (FI)
(74) Representative: Johansson, Folke Anders

(57) **Abstract**

A transport package (3) of a cellular transceiver module (1), comprising conductive material, forms a functional part of an antenna of the cellular transceiver module when connected to the cellular transceiver module. Together with an external antenna (2), the transport package improves the operation of the external antenna forming a ground plane for the antenna or functioning as its part when galvanically connected thereto. Alternatively, the transport package can be used as a ground plane for the cellular transceiver module's own antenna when placed underneath the antenna and connected to the ground pole of the cellular transceiver module's antenna interface. Thus, the transport package can be used to protect the cellular transceiver module or as a functioning part of its antenna.

## Description

The present invention relates to a transport package solution for a radio communication device to be detachably coupled inside a computer.

Different kinds of auxiliary equipment can be connected to portable computers using a PCMCIA interface (Personal Computer Memory Card International Association). Cards to be connected to a PCMCIA interface are called PCMCIA- or PC- cards. There are three different types of cards of which PCMCIA II is approximately the size of a credit card, but 5 mm thick. The Nokia Card Phone cellular transceiver module presented at the CeBit -97 Fair is one example of this kind of PCMCIA II type card. The cellular transceiver module is a complete mobile station without a user interface and, therefore, a computer can be connected to a public telecommunication network by means of the cellular transceiver module. Thus, it is possible, for example, to read and write electronic mail with it. To protect the module against mechanical damage, it is supplied with a plastic transport package so that the module can be protected against breakage when transported or stored separately.

An internal PC slot of a portable computer is a problematic positioning place for a radio receiver due to electromagnetic interference caused by the computer. A cellular transceiver module, according to the GSM 2 standard ETSI TS 101 157 V6.0.0 (1998-01), must be able to receive by its antenna an extremely weak radio signal at a level of -102 dBm, whereas some portable computers have been measured to produce to the same antenna radio interference even at a level of-80 dBm, i.e. at a more than hundredfold strength. This radio interference impedes the reception of radio messages. Therefore, a CCP cellular transceiver module is also equipped with an external antenna interface, whereto a separate external auxiliary antenna can be connected at a distance of about 0.5 m from the computer. When a cellular transceiver module's radio connection becomes poor, it can be improved by connecting a separate external antenna to the external antenna interface. An external antenna can also be used for arranging as flawless data transmission as possible by means of a radio link used by a computer. In this case, however, a user of a cellular transceiver module should carry with him/her in addition to the module also an antenna, an antenna cable and a transport package for the module, which complicates the use of the module for data transmission purposes of a mobile user. Besides good radiation properties, the external antenna of a cellular transceiver module is also expected to have a structure that causes minimum disturbance to its surroundings, as well as good transportability, i.e. it should be small in size and easy to pack and carry with. If it is not easy to carry the antenna with the module, it is easily left behind and, thus, it cannot be used when necessary. In addition to its mechanical strength properties, the requirements set on the transport package for a cellular transceiver module include ease of use when packing the cellular transceiver module in it and again when taking the module from inside it for reuse. The package should also always accompany the module so that it would always be available when needed to protect the module during transport or storage.
Now, a solution has been found to avoid said problems or, at least, to mitigate them. The present invention facilitates the use of a transport package; an external antenna and an antenna cable needed to use a cellular transceiver module, as well as the cellular transceiver module. By manufacturing the transport package so that at least one of its parts conducts well electricity, it can be used to enhance the operation of the antenna connected to the cellular transceiver module and, thus, to improve the quality of the radio connection established. This is based on that the package forms a ground plane for the antenna when being insulated from the antenna or that the package's conductive part functions as the antenna or part of the antenna. By also using the transport package as a package for the external antenna and the antenna cable, it is possible to substantially facilitate and speed up the process of taking the external antenna to be coupled to the cellular transceiver module into use and again returning it into its transport condition. The transport package having at least one part that conducts well electricity can also be put in place underneath the module's own antenna located outside a computer at the end of the cellular transceiver module coupled to a PCMCIA slot, and connect it as the antenna's ground plane through the ground pole of the module's antenna interface.

A transport package according to the invention for a mobile station comprising an antenna interface and, in the antenna interface, a first pole and a second pole, the transport package comprising
a space wherein the mobile station can be placed for transport and from where it can be removed for use, and
walls surrounding and protecting the mobile station when the mobile station is inside the transport package, is characterised in that
the transport package comprises a first part comprising material that conducts electricity, and that
said first part is arranged to be connected to the first pole of the mobile station's antenna interface or to the second pole as the mobile station's antenna part.

A combination according to the invention comprising a mobile station having an antenna interface and, in the antenna interface, a first pole and a second pole, as well as a transport package intended for said mobile station, which transport package comprises
a space wherein the mobile station can be placed for transport and from where it can be removed for use, and
walls surrounding and protecting the mobile station when the mobile station is inside the transport package, is characterised in that
the transport package comprises a first part comprising material that conducts electricity, and
the combination comprises connection means by which the first part is arranged to be connected to said first or second pole as the mobile station's antenna part.

In a solution, according to a first embodiment of the invention, the external antenna is preferably during use insulatedly attached to the centre part of the transport package perpendicular to the plane of the transport package when opened. The transport package is made fully or in parts of metal or equipped with a layer or net that conducts well electricity. The part of the transport package that conducts well electricity can be connected as the ground plane for the external antenna to be coupled to a mobile station by connecting it to a second pole of the mobile station's antenna interface, i.e. the ground pole. The external antenna and the transport package are preferably connected to the mobile station with a coaxial cable, in which case a centre lead of the coaxial cable, i.e. a so-called signal lead is used to conduct radio signals between the external antenna and the mobile station. A wrapped wire, connected from the end of the mobile station to the ground plane of the coaxial cable, which insulatedly surrounds the centre lead, generates a Faraday cage around the centre lead as a shield against interference and is preferably connected to the second pole of the mobile station. Because the coaxial cable does not significantly radiate at a radio frequency, neither its length nor its straightness affects the operation of the external antenna.

Alternatively, according to a second embodiment of the invention, the transport package comprises a part that conducts well electricity, which is galvanically connected to an external antenna, in which case it increases the size of the external antenna and changes its radiation pattern. The armature of the antenna cable is preferably not connected to the transport package's conducting part to prevent the antenna cable from becoming part of the antenna. The antenna cable's signal lead is galvanically connected to the combination of the transport package's conductive part and the external antenna and, thus, a monopole antenna-like structure, formed by the transport package and the external antenna, is implemented.

Alternatively still, according to a third embodiment of the invention, the transport package can be used for forming a dipole antenna. The transport package may comprise one straight part that conducts well electricity, as well as means for electrically insulatedly placing an antenna rod as an extension of this part. When connected to the two different poles of the mobile station's antenna interface, these parts function as a dipole antenna. In this case, a cable with a conductive armature inside of which there are two insulated leads; one for either side of the dipole antenna, is preferably used for the connection. Alternatively, a balun (Balanced - Unbalanced) element can be arranged to the package for balancing the antenna signal to be used with a normal coaxial cable having only one lead inside the armature.

Said external antenna can also be partly or fully integrated to the transport package, e.g. it can be manufactured for the transport package as surface mounting or it can be partly or fully embedded in the structure of the package. The transport package or its part can also function as an external antenna for a cellular transceiver module. In this case, when an external antenna is used with a cellular transceiver module, no separate antenna rod is required.

According to a fourth embodiment of the invention, the transport package's conducting part is used as the ground plane for the cellular transceiver module's own antenna. A space is preferably shaped underneath the cellular transceiver module's own antenna, wherein the transport package's conductive part also fits at least partly when the cellular transceiver module is coupled to a horizontal PCMCIA-slot bordered by the plane of a computer's lower edge. Terminals that connect the conductive part in its place underneath the cellular transceiver module's antenna installed as the antenna's ground plane at the second pole of the cellular transceiver module's antenna interface, are arranged on this part and the cellular transceiver module.

An external antenna can preferably be arranged to fit inside the transport package together with a cellular transceiver module, whereupon both the cellular transceiver module and the external antenna can be mechanically protected during transport by a common transport package. In addition, a space can preferably be arranged in the transport package for an antenna cable, which can be used for connecting the external antenna to the mobile station.

In the following, the present invention will be discussed in detail by referring to the enclosed drawings, in which
- Figure 1: shows, as an example, a PC cellular transceiver module, according to the first embodiment of the invention, and the connection of an external antenna coupled thereto and a transport package for the cellular transceiver module;
- Figure 2: shows a transport package for a PC cellular transceiver module, according to the first embodiment of the invention, in readiness for transport;
- Figure 3: shows the transport package for a cellular transceiver module to be coupled to a computer, shown in Figure 2, the cellular transceiver module and an external antenna coupled thereto, in readiness for operation;
- Figure 4: shows a detail of the insulated joint of the external antenna to the cellular transceiver module's transport package, shown in Figure 3;
- Figure 5: shows the interface of a PC cellular transceiver module, an external antenna coupled thereto and the cellular transceiver module's transport package, according to a second embodiment of the invention;
- Figure 6: shows a transport package for a PC cellular transceiver module and the galvanic connection of an external antenna to the transport package, according to a second embodiment of the invention;
- Figure 7: shows the connection of a PC cellular transceiver module, an external antenna coupled thereto and the cellular transceiver module's transport package, according to a third embodiment of the invention;
- Figure 8: shows a transport package suitable for use as the external antenna of a PC cellular transceiver module, according to a third embodiment of the invention; and
- Figure 9: shows a PC cellular transceiver module coupled to a computer and a transport package for the cellular transceiver module in readiness for operation, according to a fourth embodiment of the invention.

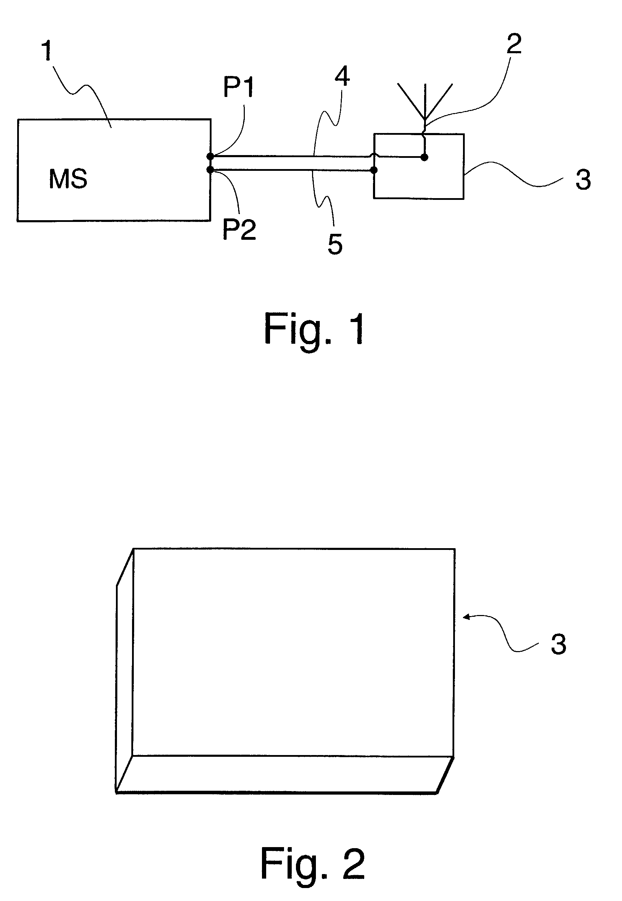

Figure 1 shows, as an example, a diagram of connections according to the first embodiment of the invention. A first head of a rod antenna 2 is connected with a lead 4 to a first pole, i.e. a signal pole P1 of a two-pole antenna interface of a cellular transceiver module MS 1 and a cover of a transport package 3 of the cellular transceiver module, the cover comprising conductive material, is connected with a lead 5 to a second pole 2 of the antenna interface as the ground plane for an external antenna. The whole transport package is advantageously made from metal, e.g. aluminium, which has good electroconductivity and a small specific gravity, i.e. a transport package made from it is relatively light. When placed underneath the rod antenna, the transport package forms with respect to the size of the external antenna a large and well conducting plane, which then functions as a ground plane. The ground plane reflects radio waves and changes the rod antenna's radiation pattern so as to at least partly correspond with the radiation pattern of the upper side of a vertical dipole antenna. Even if the part arranged for the transport package's ground plane is not grounded, it still improves the reception sensitivity of the external antenna containing metal and the strength of the radio field transmitted by the antenna. So, the rod antenna 2 is galvanically insulated from the electroconductive part used as the ground plane transport of the package.

Figure 2 shows, in perspective, an example of a cellular transceiver module's transport package 3, according to the first embodiment of the invention, when closed. The transport package is of the size and shape closing a mobile station device inside it, e.g. a rectangular box, right-angled and its depth is far smaller than its width when the mobile station device is the size of a PC card. The transport package can also be a box that is open on one side into which the mobile station device can be slit for the time of transport and from which it can again be slit out for use.

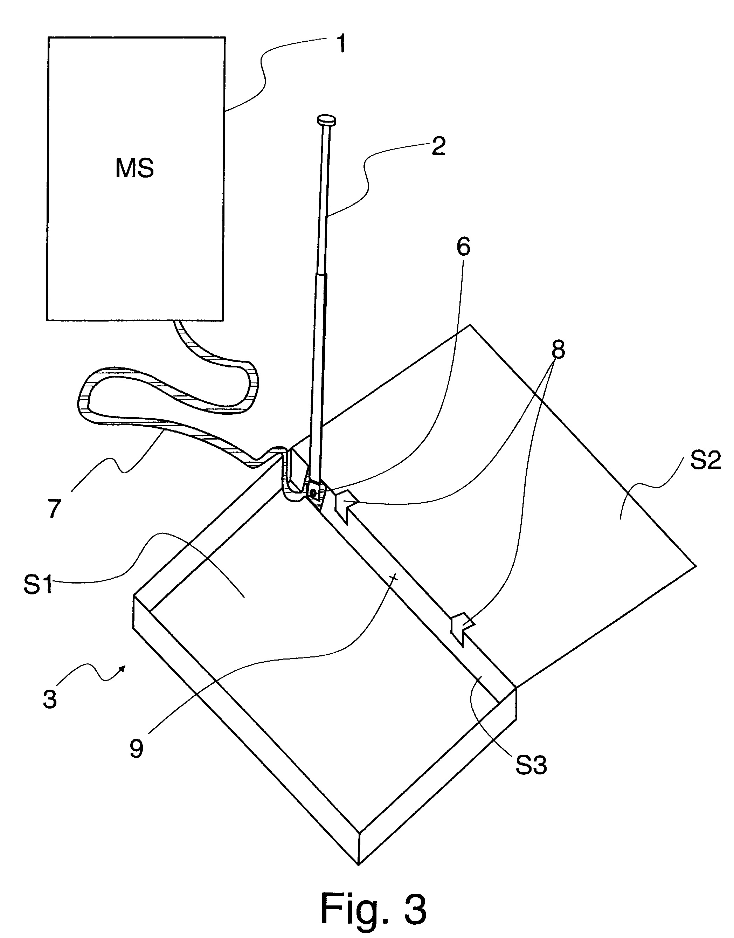

Figure 3 illustrates, in perspective, an example of the cellular transceiver module's transport package 3, shown in Figure 2, and an external antenna 2 ready for use. The long side of the cover of the transport package is hinged with hinges 8 to the lower part that forms a box. The hinges 8 allow the cover to open more than 180 °, in which case the width of the opened transport package is approximately twice as wide as the closed box. The external antenna 2 is preferably turnably attached with a pivot 6 to a side S3 of the transport package, whereto also a cover S2 of the transport package has been hinged with the hinges 8. In order that underneath the external antenna as large a conductive area as possible and as symmetrically with respect to the antenna as possible can be provided as a ground plane, the transport package is preferably hinged of two parts substantially electroconductive, of the same size and connected to each other, such as the cover S2 and a bottom S1, to be folding. The attachment of the external antenna is arranged so that it does not form an electrical connection to the electroconductive parts used as its ground plane, e.g. by arranging an insulating plate between the external antenna put in the operating position and the electroconductive parts of the transport package and by using the pivot 6 that insulates electricity. The external antenna is preferably placed in the centre of the horizontal projection 9 of the transport package in its operating position to create as symmetrical a radiation pattern as possible for the antenna. The pivot 6 allows the external antenna to be turned from the direction of the transport package perpendicular to the plane of the transport package's bottom S1. Both the external antenna 2 and the transport package are connected to a cellular transceiver module 1 with an antenna cable 7.

The external antenna of a mobile station can also be formed of a part of the transport package, e.g. the side S3 of the transport package that has been turned to an upright position or it can be made into a surface antenna on the transport package's inner or outer surface. This makes it even easier to take the cellular transceiver module into use, when a user only has to open the package, remove the module, connect it to a computer and connect the package and the module to one another using an antenna cable attached to the package at one end. If the user always wants to use the external antenna with the cellular transceiver module, he/she can preferably leave the antenna cable connected at its both ends and only open the transport package and connect the module to a vacant slot of a computer when necessary.

The transport package can preferably be made completely from aluminium but, alternatively, it can mainly comprise electrically insulating material and be, for example, coated with a metal net or an electroconductive coating to produce a part that conducts well electricity. Furthermore, only part of the transport package, e.g. the bottom S1, may comprise a part that conducts well electricity. The coating is preferably arranged on the transport package's inner surface, where it is better protected against scratching and the coating does not affect the transport package's appearance, when the package is closed. An antenna formed in this way can be straight in shape for forming a rod antenna, straight and two-piece for forming a dipole antenna or it may have a different shape, e.g. a ring for forming a ring antenna. In addition, the antenna cable connection can easily be arranged inside the package, which in turn enables for an easier way to bring the cellular transceiver module into operating condition. In this case, the antenna cable can be left in the vacant space in the transport package, which has closed the cellular transceiver module inside it, and it can be ready connected inside the transport package to the external antenna and, at its other end, to the packed cellular transceiver module. Hence, the cellular transceiver module can be taken into use together with the external antenna simply so that the user opens the package near a portable computer and transfers the cellular transceiver module into the slot of the computer, ready connected to the transport package and the external antenna coupled thereto.

The cellular transceiver module's own antenna can also be used as an external antenna. In this case, the module's antenna is arranged to be detachable and re-attachable. When used as an external antenna, it is first detached from the module and placed on the transport package in a place specially intended for it, preferably in the centre of a part used as the ground plane or the bottom part of a dipole antenna. Then it and the conductive part used as part of the transport package's antenna are connected to the cellular transceiver module's antenna interface with the antenna cable's leads insulated from one another, in the same way as any other separate antenna connected to the transport package.

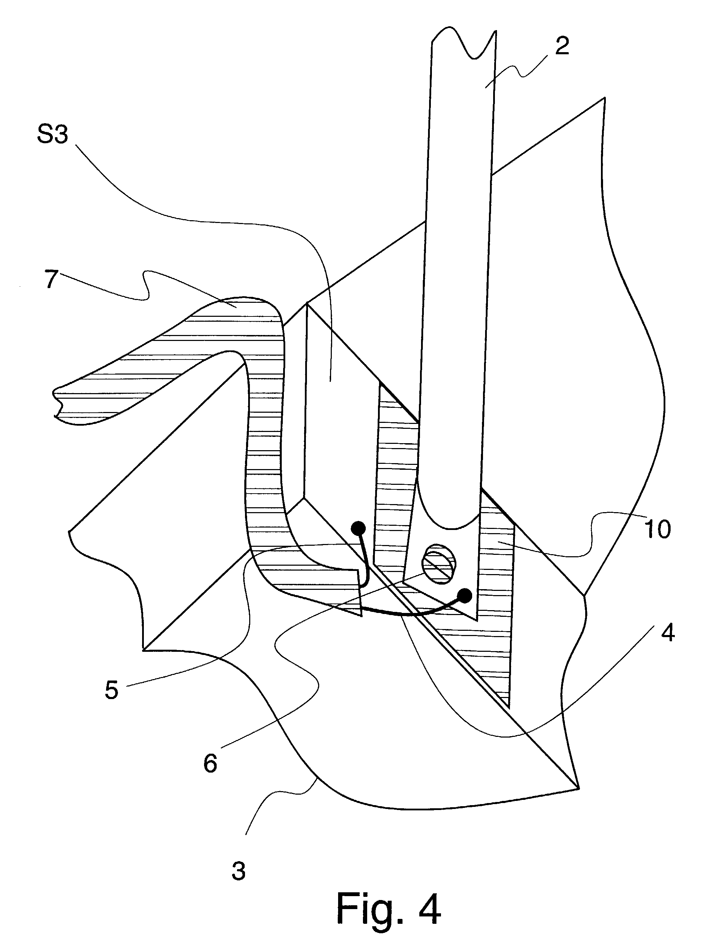

Figure 4 shows, in perspective, as an enlargement and in more detail the surroundings of the connection point of the transport package 3 and the external antenna 2, shown Figure 3. The external antenna is turnably fitted on the side S3 of the transport package with the pivot 6. The pivot 6 preferably produces enough friction between itself and the external antenna and/or between the external antenna and the side of the transport package to keep the external antenna upright.

The external antenna is insulated from the well conducting part used as the transport package's ground plane, e.g. by means of an insulating plate 10 placed between the base of the external antenna and the package, the protruding part of which preferably forms said pivot 6. The purpose of the plate and the insulating pivot is to separate the external antenna from the transport package's electroconductive parts S1, S2 and S3, so that they may provide the antenna with a ground plane. The pivot 6 can also be, e.g. a plastic or plastic-coated pin or screw, which is attached to a hole arranged on the side of the transport package or it can be conductive and belong to the external antenna provided that the hole arranged for it is insulated, e.g. with a plastic or rubber bushing so that no electroconductive connection is formed between the antenna 2 and the part used as the transport package's ground plane.

The antenna cable 7 is a coaxial cable and, on the side of the transport package, the end of its ground lead, i.e. wrapped wire 5 is soldered in the metal cover of the transport package 3 or the electroconductive part of the cover. The end of the signal or centre lead 4 of the antenna cable 7, in turn, is soldered in the base of the external antenna 2 insulated from the transport package 3. The soldered point is located in the immediate vicinity of the pivot 6, whereupon turning the external antenna to an upright position from the direction of the transport package's bottom S1 in the direction of its normal produces a minimum movement on the centre lead.

The external antenna does not necessarily have to be attached to the transport package with hinges but, instead, it can also be attached to the transport package, e.g. by simply arranging therein a hole or a recess that fits the base part of the external antenna, wherein the external antenna's base can be slipped. In this case, the external antenna is supported by the package. The edges of the package can be insulated, e.g. with a plastic bushing around such a hole or recess so that the package can be used as the external antenna's ground plane.

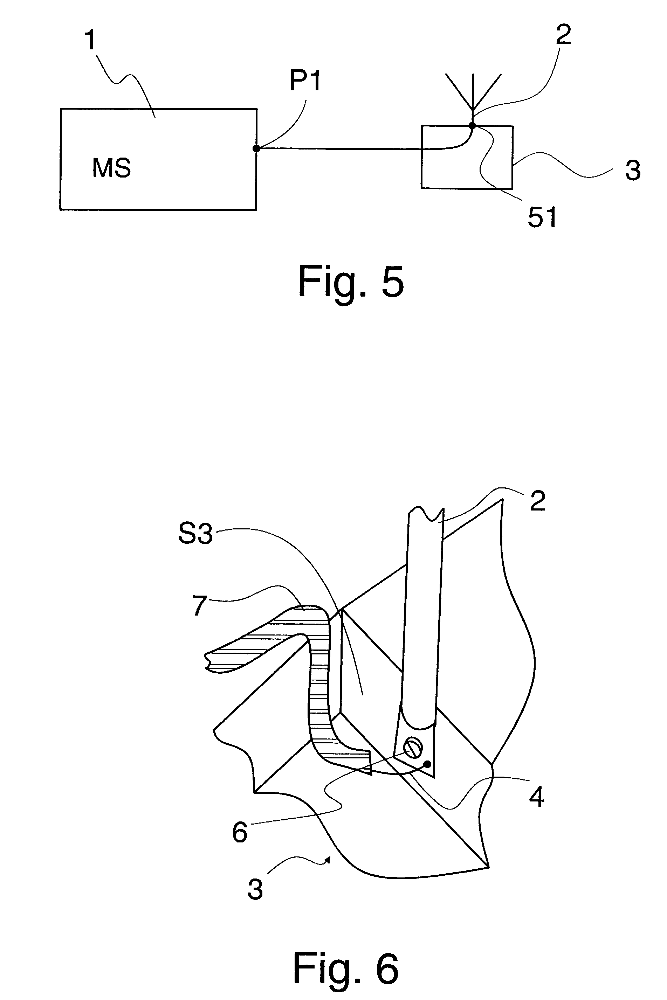

According to another embodiment of the invention, an electric contact is arranged between the external antenna and the part of the transport package that conducts well electricity at their connection point, whereupon the part can be used as part of the antenna, e.g. as the bottom part of a monopole antenna. Figure 5 shows a connection, where the external antenna 2 is galvanically connected to the electroconductive part of the transport package 3 at a point 51 and connected to the first pole P1 of the mobile station's antenna interface with the signal lead 4. By connecting the external antenna and the transport package's well conducting part together and by connecting the antenna cable's centre lead to either of them, a monopole antenna-like entity is formed. Said well conducting part of the transport package can be the whole transport package or only a part that is electrically connected to its external antenna 2.

Figure 6 shows, in perspective, the connection of the external antenna 2 and the transport package 3, as well as the end of the centre lead 4 of the antenna cable 7, according to Figure 5. The external antenna is electrically connected at its base through a pivot or a direct contact to the electroconductive side S3, when the insulating part of the invention, shown in Figure 4, is not used. The end of the centre lead is soldered in the base of the external antenna 2 near the external antenna's pivot. The centre lead can also be connected, e.g. by soldering to the transport package, near said pivot. The external antenna is turnably attached at its base to the side of the transport package with a metal pivot 6. In this case, the external antenna also forms a galvanic contact to the transport package's conductive part. The pivot can preferably be a protrusion comprised of the transport package's metal cover.

Alternatively, the external antenna can be placed on the opened transport package, placed in another position, e.g. upside down with respect to Figure 3 or Figure 6, whereupon it is not necessary that the transport package can be opened 180 ° but, instead, only 120 °.

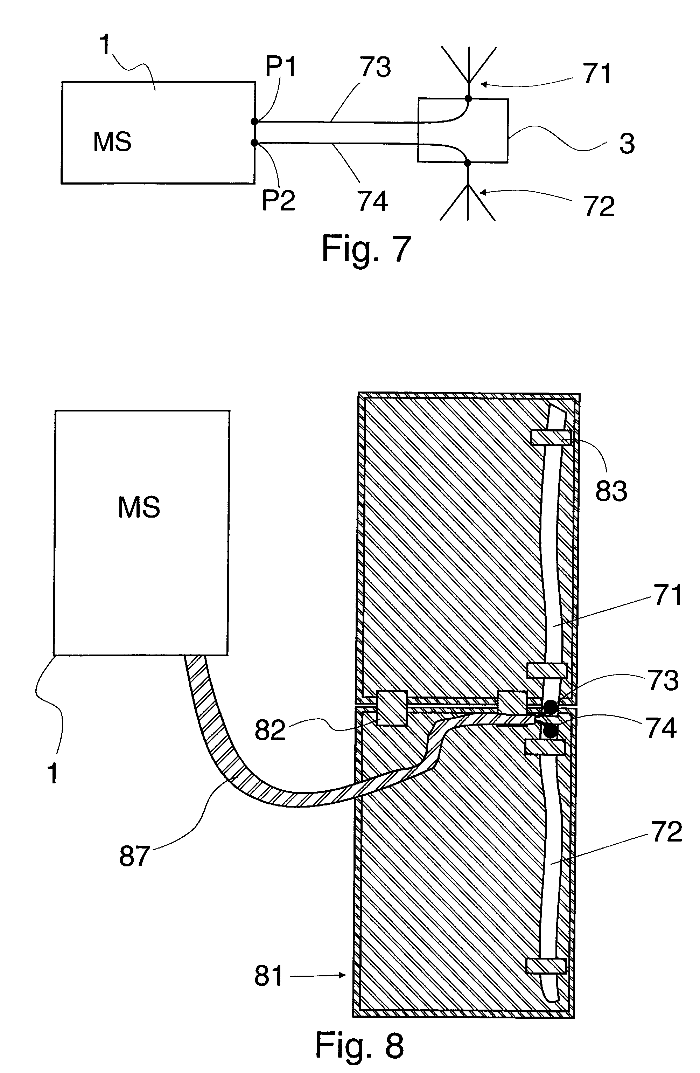

Figure 7 shows a connection, according to a third embodiment of the invention, where the transport package 3 is used as part of a dipole antenna. The first pole P1 of the antenna interface of the cellular transceiver module 1 is connected to a first side 71 of the dipole antenna with a lead 73 and the second pole P2 is connected to a second side 72 of the dipole antenna with a lead 74. The dipole antenna's sides and the leads connected to them are insulated from one another. The vacant entry of the leads 73 and 74 from the cellular transceiver module's antenna interface to the antenna is preferably protected by means of the cellular transceiver module's wrapped wire, ground grounded and insulated from the leads, which surrounds these leads (not shown in Figure 7). Alternatively, for example, an unprotected, symmetrical 2-core cable can be used for the connection.

Figure 8 shows from the front a transport package 81, suitable for use as the external antenna of the cellular transceiver module 1, opened 180 degrees when viewed from the side. The transport package is a thin, rectangular box, wherein the cellular transceiver module 1 fits. It has hinges 82 on its shorter side, the hinges turnably connecting the bottom and the cover of the box to one another. The box preferably comprises on its inner surface a lead, made from a material that conducts well electricity, which preferably is straight longitudinally and round cross-sectionally. The lead can be, e.g. a flexible metal string glued on the inner surface of the box made from plastic or it can be an insulated lead, which is supported on the surface of the box with clips 83. The length of the lead is preferably one half of the wavelength of the radio frequency used by the cellular transceiver module. The lead is cut in the middle of its length and its halves 71 and 72 are insulated from one another so that they can function as the different poles of a dipole antenna. The adjacent ends of the lead's halves 71 and 72 are preferably electrically connected to the poles of the cellular transceiver module's antenna interface with the leads 73 and 74 of the antenna cable 87, whereupon it functions as the cellular transceiver module's external dipole antenna.

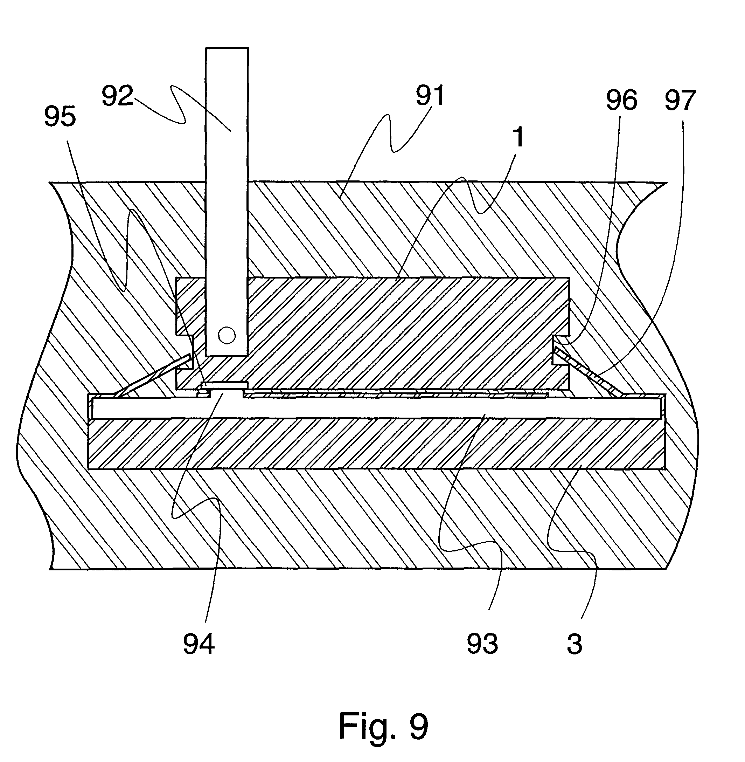

Figure 9 shows part of a computer 91 and the cellular transceiver module 1 connected thereto, viewed from the side. On the side of the cellular transceiver module, there is a rod antenna 92 that can be turned to an upright position. The cellular transceiver module's transport package 3 is attached underneath the cellular transceiver module to enhance the operation of the rod antenna. In the upper part of the transport package, there is a plane-like part 93 that conducts well electricity, which slightly departs from the surface of the transport package to form a contact 94. The contact makes a contact with a contact surface 95 of the antenna interface's second pole intended for the cellular transceiver module's ground plane, when the transport package is attached to grooves 96, located on the sides of the mobile station with respect to Figure 9, by means of flexible claws 97 that can be bent upwards from the transport package's upper surface. Thus, taking the cellular transceiver module into use requires that it is removed from its transport package and inserted into a PCMCIA slot of a computer. If the user wants to improve the cellular transceiver module's radio connection, he/she can connect the transport package underneath the cellular transceiver module. There the transport package begins to function as the ground plane for the cellular transceiver module's own antenna after being connected to the second pole of the cellular transceiver module's antenna interface. The user can do this without disconnecting the radio connection used. An advantage of the solution is that the user does not necessarily have to carry or connect an antenna cable. The PCMCIA slot of a computer does not necessarily leave a sufficiently high space for the transport package underneath the part of the cellular transceiver module coupled thereto that protrudes from the computer. An opening or a detachable part, e.g. the cover of the transport package can preferably only be used as the ground plane. In addition, the cellular transceiver module can preferably be shaped so that a space of the same thickness as the part used as the transport package's ground plane is left underneath and in the surroundings of its antenna. Thus, the solution can also be used when the slot of a computer is located right at the bottom of its side. A fourth embodiment of the invention presented here can also be combined with its other embodiments, i.e. the user can utilise the transport package either as the ground plane of the cellular transceiver module's own antenna or use it as a part affecting the functioning of the cellular transceiver module's external antenna. Hence, the transport package can also be used, e.g. as the ground plane of a rod antenna placed on the transport package or for turning a dipole antenna built from the cellular transceiver module's own antenna, detached from the transport package and the cellular transceiver module, into the cellular transceiver module's external antenna.

A transport package, according to the invention, that functions as an antenna of a cellular transceiver module or as its part can also be manufactured to operate at more than one radio frequency. Several electroconductive parts of different lengths and connection means for receiving the radio frequency used at any given time can be included therein for using the best part or the best parts. Parts can be arranged, e.g. by the user to be connected to one another so that they form an entity of suitable length electrically at any given time, for being used as an antenna.

Some of the advantages of the invention are, e.g. the combining of the mobile station's transport package and the external antenna, which improves the external antenna's sensitivity of reception and transmission capability, facilitates the transport and storage of the required parts by combining them in the same package and, at the same time, it provides a sufficiently steady base for the antenna, where it can easily be kept in an upright position. In case of a PC cellular transceiver module, due to the combination, the transport package and the external antenna can be fitted in a compact size, and the transport package can also be utilised in another way, whereupon the user does not lose it so easily when the mobile station is removed from the transport package for use, i.e. when it is connected to a computer. In addition, interference induced in the internal components of the computer cabinet is reduced, when the cellular transceiver module coupled to the computer uses an external antenna located further away from the computer than the cellular transceiver module's own antenna.

We have illustrated here, by way of example, such embodiments of the invention as best function in a radio transmitter-receiver system using vertically polarised radio transmission. Naturally, the invention can also be utilised in other polarisation planes by turning the structure formed by a transport package and an external antenna in a corresponding direction, e.g. in case of horizontal polarisation, in the horizontal direction. In addition, the transport package can be implemented in a way other than being made of two parts turning with respect to one another, to be opened. It may consist of, e.g. a single casing, designed to take a cellular transceiver module inside it, into which the cellular transceiver module can be slit or it may only cover one side of the cellular transceiver module.

This paper presents the implementation and embodiments of the present invention with the help of examples. It is obvious to a person skilled in the art that the present invention is not restricted to details of the embodiments presented above, and that the invention can also be implemented in another form without deviating from the characteristics of the invention. The embodiments presented should be considered illustrative, but not restricting. Thus, the possibilities of implementing and using the invention are only restricted by the enclosed patent claims. Consequently, the various options of implementing the invention as determined by the claims, including the equivalent implementations, also belong to the scope of the invention.

## Claims

1. A transport package (2) for a mobile station (1) comprising an antenna interface with a first pole (P1) and a second pole (P2), the transport package comprising
a space, where the mobile station (1) can be placed in for transport and from where it can be removed for use, and
walls (S1, S2, S3) that surround and protect the mobile station when the mobile station is inside the transport package, **characterised** in that
the transport package comprises a first part (2, 71, 72, S2 & S3, 93) comprising material that conducts electricity, and that
said first part is arranged to be connected to the first pole (P1) or to the second pole (P2) of the mobile station's antenna interface as the mobile station's antenna part.

2. A transport package according to claim 1, **characterised** in that
said first part is arranged to be connected in one of the following ways:
to the first pole (P1), and when connected thereto it forms part of the first part (2, 71) of the antenna, and at least one other electroconductive part is connected thereto to form the rest of the first part (2,71) of the antenna,
to the first pole (P1), and when connected thereto it alone forms the first part (2, 71) of the antenna,
to the second pole (P2), and when connected thereto it forms part of the second part (72, S2 & S3) of the antenna, and at least one other electroconductive part is connected thereto to form the rest of the second part (72, S2 & S3) of the antenna,
to the second pole (P2), and when connected thereto it alone forms the second part (72, S2 & S3) of the antenna,
to the second pole (P2), and when connected thereto it forms part of the ground plane (S2 & S3 & S3, 93) of the antenna, and at least one other electroconductive part is connected thereto to form the rest of the second part (72, S2 & S3) of the antenna,
to the second pole (P2), and when connected thereto it alone forms the ground plane (S2 & S3 & S3, 93) of the antenna.

3. A transport package according to claim 1, **characterised** in that
the transport package comprises at least on one wall (S1, S2, S3) a second part (72, S2 & S3) comprising electroconductive material, which is arranged to be electrically connected to said second pole (P2) and insulated from said first part, and
said first part is arranged to be connected to said first pole (P1) as the mobile station's external antenna, and
when connected to said second pole (P2), said second part functions as a ground plane for the mobile station's antenna.

4. A transport package according to claim 3, **characterised** in that
the transport package has two states, a state of transport readiness, wherein it forms a compact protective casing for a mobile station closed inside it and a state of operation readiness, wherein the transport package is available for use as part of a cellular transceiver module's antenna, and in said state of operation readiness:
said first part (71) and second part (72) are arranged as two successive, substantially parallel, elongated parts (71, 72) of the antenna, and insulated from one another, and the first part (71) is arranged to be connected substantially at its end on the side of the second part (72) to said first pole (P1), and
said second part (72) is correspondingly arranged to be connected substantially at its end on the side of the first part to said second pole (P2), and
said first and second parts are substantially of the same size as for their electric length forming the two parts of a dipole antenna.

5. A transport package according to claim 1, **characterised** in that
the transport package has two states, a state of transport readiness, wherein it forms a compact protective casing for a mobile station closed inside it and a state of operation readiness, wherein the transport package is available for use as part of a cellular transceiver module's antenna,
said first part (2, 71) can be detached and re-connected to the transport package, and that
the transport package also comprises
first mounting means for attaching said first part to the transport package in the state of operation readiness.

6. A transport package according to claim 5, **characterised** in that
said first part (2, 71) is arranged, in the state of transport readiness, to be folded in said transport package (2) and, in the state of operation readiness, to be opened to its full length for use as part of the antenna.

7. A transport package according to claim 5, **characterised** in that
said transport package comprises second attachment means,
said first part (2, 71) is arranged to be placed on the side of the transport package (2) for transport and to be attached thereto by means of said second attachment means.

8. A transport package according to claim 1, **characterised** in that
said first part (2, 71) is arranged on the surface of the transport package as a surface antenna.

9. A transport package according to claim 1, **characterised** in that
it comprises connection means (94) for connecting said first part (93) to the second pole (P2) of the antenna interface of the mobile station (1), whereupon the first part functions as a ground plane for the mobile station's own antenna (92) when placed in the immediate vicinity of the mobile station.

10. A transport package according to claim 1, **characterised** in that
said mobile station (1) is a cellular transceiver module manufactured as a PC-card,
said space is the right size for said cellular transceiver module so that the cellular transceiver module fits in the space, however, without having room to substantially move, whereupon the walls of the transport package protect the cellular transceiver module against mechanical damage.

11. A combination comprising a mobile station (1) having an antenna interface and, in the antenna interface, a first pole (P1) and a second pole (P2), as well as a transport package (2) intended for said mobile station, the transport package comprising
a space where the mobile station (1) can be placed for transport and from where it can be removed for use, and
walls (S1, S2, S3) surrounding and protecting the mobile station when the mobile station is inside the transport package, **characterised** in that
the transport package comprises a first part (2, 71) comprising material that conducts electricity, and
the combination comprises connection means by which the first part is arranged to be connected to said first or second pole as the mobile station's antenna part.

12. A combination according to claim 1, **characterised** in that said transport package (2) also comprises
at least on one wall (S1, S2, S3) a second part (72, S2 & S3) comprising material that conducts well electricity, and the combination comprises
second connection means (5, 74) by which said second part (72, S2 & S3) is arranged to be coupled to the second pole (P2) of the antenna interface of the mobile station (1) as a second antenna part of the mobile station.
